# EUROPEAN PATENT SPECIFICATION

(11) **EP 1 863 257 B1**
(45) Date of publication and mention of the grant of the patent: **13.07.2011**
(21) Application number: 07107817.4
(22) Date of filing: 09.05.2007
(51) Int. Cl.: H04L 29/06

(54) **Communication system and voice over internet protocol apparatus and data communication method**
Kommunikationssystem und Voice-over-Internet-Protokollvorrichtung und Datenkommunikationsverfahren
Système de communication et appareil de protocole internet vocal et procédé de communication de données

(30) Priority: 29.05.2006 KR 20060048376
(43) Date of publication of application: 05.12.2007
(73) Proprietor: Samsung Electronics Co., Ltd., Suwon-si, Gyeonggi-do (KR)
(72) Inventor: Hwang, Soon-hoon, Gyeonggi-do (KR)
(74) Representative: D'Halleweyn, Nele Veerle Trees Gertrudis

(56) References cited:
- EP-A1- 1 411 736
- WO-A-02/19053
- US-A1- 2004 156 495
- US-A1- 2004 204 033

## Description

### CROSS-REFERENCE TO RELATED APPLICATIONS

### BACKGROUND OF THE INVENTION

### Field of the Invention

Methods and apparatuses consistent with the present invention relate to a communication system, a Voice over Internet Protocol (VoIP) apparatus, and a data communication method, and more particularly, to a communication system, a VoIP apparatus, and a data communication method, which can reduce the cost to transmit or receive a text message between wireless communication apparatuses by using a wireless communication apparatus employing a VoIP communication between VoIP apparatuses.

### Description of the Related Art

As communication technologies have been recently developed to meet a user's demand for portability, wireless communication apparatuses such as mobile phones and Personal Digital Assistants (PDA)have been popularized. In the wireless communication apparatus, a Short Message Service (SMS) is one of most popular services.

When a user inputs text message, a transmitter number, and a receiver number by manipulating a key manipulating module of the wireless communication apparatus, the SMS service provider may transmit the text message to the other wireless communication apparatus corresponding to the receiver number. At this time, the communication service provider levies a using fee on the user.

Additionally, the use of a VoIP video telephone to support a bi-directional video telephony as a kind of moving picture processed in real-time has recently increased. The VoIP apparatus including the VoIP video telephone through which a user can communicate with another user in real time by the Internet may advantageously transmit bi-dimensional video and sound data through a high-speed Internet system without an additional fee.

Thus, a using fee can be reduced when transmitting or receiving a text message between wireless communication apparatuses in a VoIP environment instead of the conventional Short Message Service (SMS) on a fee-charging basis.

US 2004/0204033 discloses the use of a VoIP network to send data originating from a mobile phone whereby the mobile phone is connected to the VoIP network via Bluetooth.

### SUMMARY OF THE INVENTION

The present invention provides a communication system as disclosed in claim 1 and a data communication method as disclosed in claim 10, which can reduce a using fee to transmit or receive a text message between wireless communication apparatuses by using a wireless communication apparatus employing a VoIP communication between VoIP apparatuses.

According to an aspect of the present invention, there is provided a communication system, comprising: a first VoIP apparatus to receive transmitting data comprising destination information related to a receiving wireless communication apparatus from a transmitting wireless communication apparatus through short-range communication, and to transmit the transmitting data through VoIP communication; a second VoIP apparatus to receive the transmitting data through VoIP communication, and to transmit the transmitting data to the receiving wireless communication apparatus; and a server to store an identification address of the second VoIP apparatus corresponding to the destination information, and to transmit the transmitting data to the second VoIP apparatus based on the transmitting data received from the first VoIP apparatus and the stored identification address.

The transmitting data may further comprise text message data input through the transmitting wireless communication apparatus.

The first VoIP apparatus may comprise a first converting module to convert the transmitting data received through the short-range communication into transmitting data conforming to a VoIP to be transmitted through VoIP communication.

The second VoIP apparatus may comprise a second converting module to convert the transmitting data received through VoIP communication into transmitting data conforming to a wireless protocol to be transmitted through short-range communication.

The destination information may comprise an identification number of the receiving wireless communication apparatus.

The server may comprise a server controller to store destination address information where the identification addresses of a plurality of second VoIP apparatuses corresponding to a plurality of destination information are stored by an identification number, and to transmit the transmitting data to the second VoIP apparatus corresponding to the receiving wireless communication apparatus having the identification number equivalent to the destination information of the transmitting data based on the transmitting data received from the first VoIP apparatus and the stored identification number.

The first VoIP apparatus may comprise a first controller to store at least one identification number corresponding to the transmitting wireless communication apparatus to perform short-range communication with the first VoIP apparatus, and to transmit the identification address of the second VoIP apparatus and a new identification number to the server when the first VoIP apparatus receives the new identification number from the transmitting wireless communication apparatus that has not been stored.

The server controller may update the destination address information based on the received identification address of the first VoIP apparatus and the new identification number when the server receives the identification address of the first VoIP apparatus and the new identification number.

The second VoIP apparatus may comprise a display module and a second controller to process text message data from the transmitting data received through VoIP communication and to display a text message corresponding to the text message data on the display module.

In order to control the first VoIP apparatus, the first controller may undergo a predetermined validation process through the VoIP communication, connect to the server, and transmit the identification address of the first VoIP apparatus to the server, and in order to control the second VoIP apparatus the second controller undergoes a predetermined validation process through the VoIP communication, connects to the server, and transmits the identification address of the second VoIP apparatus to the server.

The server controller may replace previously stored identification addresses of the first VoIP apparatus and the second VoIP apparatus corresponding to the destination address information with the respective identification addresses transmitted from the first VoIP apparatus and the second VoIP apparatus to be connected to the server through the predetermined validation process.

The short-range communications between the transmitting wireless communication apparatus and the first VoIP apparatus and between the receiving wireless communication apparatus and the second VoIP apparatus may comprise one of an infrared communication, an ultrasonic communication, and a Bluetooth communication.

According to another aspect of the present invention, there is provided a communication system, comprising: a first VoIP apparatus to receive transmitting data including destination information from a transmitting wireless communication apparatus through short-range communication, and to transmit the transmitting data through VoIP communication; and a second VoIP apparatus corresponding to the destination information to receive the transmitting data from the first VoIP apparatus through VoIP communication, and to transmit the transmitting data to the receiving wireless communication apparatus through short-range communication.

The transmitting data may further comprise text message data input through the transmitting wireless communication apparatus.

The destination information may comprise an identification address of the second VoIP apparatus.

The first VoIP apparatus may comprise a first converting module to convert the transmitting data received through short-range communication into transmitting data conforming to a VoIP to be transmitted through VoIP communication.

The second VoIP apparatus may comprise a second converting module to convert the transmitting data received through VoIP communication into transmitting data conforming to a wireless protocol to be transmitted through short-range communication.

The second VoIP apparatus may comprise a display module and a controller to process the text message data from the transmitting data received through VoIP communication and to display a text message corresponding to the text message data on the display module.

According to another aspect of the present invention, there is provided a VoIP apparatus, comprising: a short-range communication module to perform short-range communication with a transmitting wireless communication apparatus to transmit transmitting data including destination information; a VoIP communication module to perform VoIP communication; a converting module to convert the transmitting data received through the short-range communication module into transmitting data conforming to a VoIP to be transmitted through the VoIP communication module, and to convert the transmitting data received through the VoIP communication module into transmitting data conforming to a wireless protocol to be transmitted through the short-range communication module; and a controller to control the VoIP communication module, the short-range communication module, and the converting part, to convert the transmitting data received through the short-range module into transmitting data conforming to the VoIP to be transmitted through the VoIP communication module, and to convert the transmitting data received through the VoIP communication module into transmitting data conforming to the wireless protocol to be transmitted through the short-range communication module

The transmitting data may comprise a text message data input through the transmitting wireless communication apparatus.

The destination information may comprise an identification address of a VoIP apparatus corresponding to a receiver of transmitting data; and a controller controls the VoIP communication module to transmit the converted transmitting data to the receiving VoIP apparatus corresponding to the destination information of the transmitting data.

The controller may store at least one identification number corresponding to the transmitting wireless communication apparatus to perform short-range communication with the VoIP apparatus, and to transmit the identification address of the VoIP apparatus including the controller itself and a new identification number to a server that controls VoIP communication when the VoIP apparatus receives the new identification number that was not previously stored from the transmitting wireless communication apparatus that transmits the transmitting data through short-range communication.

The VoIP apparatus further may comprise a display module, wherein the controller processes the transmitting data received through the VoIP communication, and displays a text message corresponding to the text message data on the display module.

According to another aspect of the present invention, there is provided a data communication method to employ a communication between VoIP apparatuses, comprising: receiving transmitting data including destination information related to a receiving wireless communication apparatus from a transmitting wireless communication apparatus through short-range communication with a first VoIP apparatus; converting the transmitting data into transmitting data conforming to a VoIP; transmitting the converted transmitting data to a server to store destination address information including an identification address of a second VoIP apparatus corresponding to the destination information through VoIP communication; and transmitting the transmitting data from the server to the second VoIP apparatus based on the transmitting data received from the first VoIP apparatus and the destination address information.

The transmitting data may comprise text message data input through the transmitting wireless communication apparatus.

The data communication method may further comprise converting the received transmitting data into transmitting data conforming to a wireless protocol, and transmitting the converted transmitting data through the short-range communication, in the case that the second VoIP apparatus receives the transmitting data from the server.

The data communication method may further comprise processing the received transmitting data and displaying a text message corresponding to the text message data, in the case that the second VoIP apparatus receives the transmitting data from the server.

The destination information may comprise an identification number of the receiving wireless communication apparatus.

The data communication method, may further comprise storing at least one identification number of the transmitting wireless communication apparatus to perform short-range communication in the first VoIP apparatus; determining whether to receive a new identification number or use a previously stored identification number from the transmitting wireless communication apparatus based on the transmitting data received through short-range communication; and transmitting an identification address of the first VoIP apparatus and the new identification number to the server when receiving the new identification number from the transmitting wireless communication apparatus.

The data communication method may further comprise updating the destination address information based on the identification address of the first VoIP apparatus and the new identification number when receiving the identification address of the first VoIP apparatus and the new identification number from the first VoIP apparatus.

The data communication method may further comprise connecting the second VoIP apparatus to the server through a predetermined validation process; and transmitting the identification address of the second VoIP apparatus to the server from the second VoIP apparatus that is connected to the server.

The data communication method may further comprise replacing a corresponding previously stored identification address with the new-received identification address when receiving the identification address from at least one of the second VoIP apparatuses.

### BRIEF DESCRIPTION OF THE DRAWINGS

The above and other aspects of the present invention will become apparent and more readily appreciated from the following description of exemplary embodiments, taken in conjunction with the accompanying drawings of which:
FIG. 1 is a schematic block diagram illustrating a communication system according to a first exemplary embodiment of the present invention;
FIG. 2 is another schematic block diagram illustrating a communication system according to a second exemplary embodiment of the present invention;
FIG. 3 is a control block diagram illustrating a wireless communication apparatus, a first VoIP apparatus, and a server according to the first exemplary embodiment of the present invention;
FIG. 4A is a schematic flowchart illustrating a data communication operation in the communication system according to the first exemplary embodiment of the present invention;
FIGS. 4B and 4C are flowcharts illustrating the data communication operation in the communication system according to the first exemplary embodiment of the present invention corresponding to FIG. 4A; and
FIGS. 5A and 5B are flowcharts illustrating the data communication operation in the communication system according to the second exemplary embodiment of the present invention.

### DETAILED DESCRIPTION OF EXEMPLARY EMBODIMETNS OF THE INVENTION

Reference will now be made in detail to the exemplary embodiments of the present invention, examples of which are illustrated in the accompanying drawings, wherein like reference numerals refer to like elements throughout.

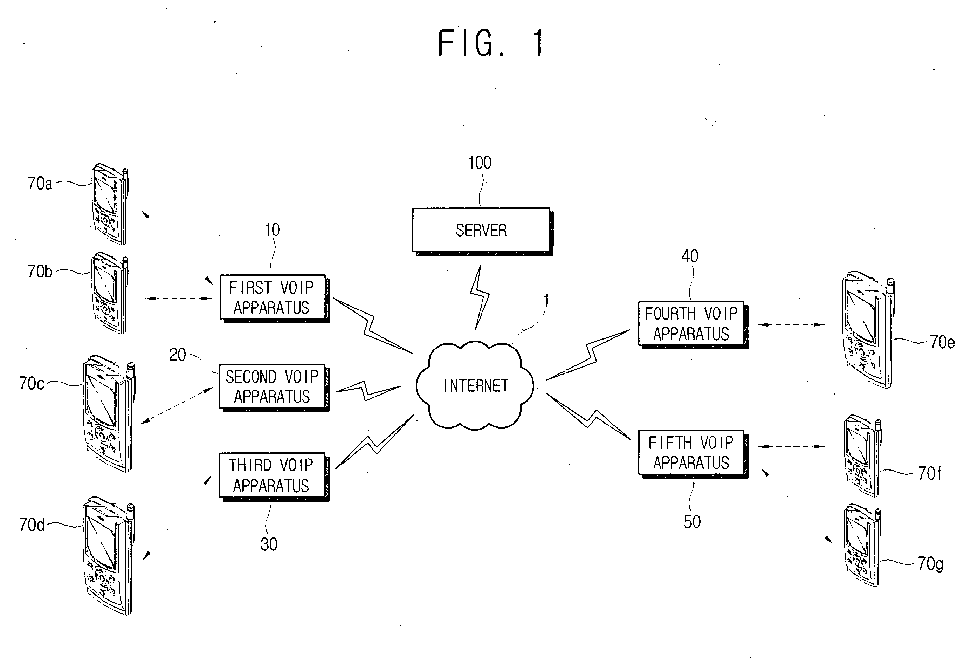

FIG. 1 is a schematic block diagram illustrating a communication system according to a first exemplary embodiment of the present invention. As illustrated therein, the communication system includes wireless communication apparatuses 70a, 70b... and 70g which are capable of short-range communication and transmit or receive data including destination information; VoIP apparatuses 10, 20... and 50 which perform short-rage communication with the wireless communication apparatuses 70a, 70b... and 70g and are capable of Voice over Internet Protocol (VoIP) communication by Internet 1; and a server 100 which supports the VoIP communication between the VoIP apparatuses 10, 20,... and 50 via Internet 1.

The wireless communication apparatuses 70a, 70b... and 70g may include communication apparatuses capable of a wireless communication such as mobile phones and PDAs. Hereinafter, the wireless communication apparatuses 70a, 70b... and 70g will be described with reference to a mobile phone by way of example of the wireless communication apparatus.

Mobile phones 70a, 70b... and 70g may each include a key input module to input a text message by using a numeral, a letter, etc. Here, the letter may include various letters including English letters, Korean letters, and the like. The mobile phones 70a, 70b... and 70g may each include a configuration to manipulate a numeral key, a letter key, etc., to transmit a receiving phone number and/or the text message. On the other hand, the mobile phones 70a, 70b... and 70g may each have short-range communication with the VoIP apparatuses 10, 20... and 50. Here, short-range communication is a communication method wherein apparatuses are capable of communicating with each other in a short range. For example, short-range communication includes infrared communication employing an infrared signal, ultrasonic communication employing an ultrasonic signal, and Bluetooth communication.

If a first mobile phone 70a is located within a predetermined range capable of having short-range communication with the first VoIP apparatus 10, the first mobile phone 70a will have short-range communication with a first VoIP apparatus 10. If the first mobile phone 70a is located within a range capable of having short-range communication with a second VoIP apparatus 20, the first mobile phone 70a will have short-range communication with the second VoIP apparatus 20. That is, as shown in FIG. 1, the first VoIP apparatus 10 has short-range communication with the first mobile phone 70a and a second mobile phone 70b, and the second VoIP apparatus 20 has short-range communication with a third mobile phone 70c, but are not limited to this first exemplary embodiment. Alternatively, a wireless communication apparatus that is located within a range capable of having the short-range communication with a VoIP apparatus may have short-range communication with the VoIP apparatus.

The respective VoIP apparatuses 10, 20... and 50 convert sound data into an Internet protocol data packet, and transmit or receive the converted Internet protocol data packet to or from each other via Internet 1. Accordingly, the VoIP apparatuses 10, 20... and 50 can have two-way communication with each other. It is preferable and not necessary that the respective VoIP apparatuses 10, 20... and 50 include a VoIP video telephone having a VoIP function that has two-way communication with another video telephone having the same by processing at least one of sound and video data.

Preferably, but not necessarily, the VoIP apparatuses 10, 20... and 50 include a large-scale apparatus having a predetermined size. Here, the large-scale apparatuses may be fixably put on an area. For example, the large-scale apparatus may include a television (TV) or a monitor having a VoIP videophone function, a large-scale video telephone, and an interphone having the VoIP videophone function. In particular, it is preferable but not necessary that the VoIP apparatuses 10, 20... and 50 include a display apparatus having a display part, i.e., the TV or the monitor having the VoIP videophone function.

The VoIP apparatuses 10, 20... and 50 may have short-range communication with the mobile phones 70a, 70b... and 70g, respectively, which are located within a range capable of having the short-range communication therewith. At this time, the VoIP apparatuses 10, 20... and 50 may have VoIP communication with each other by using Internet 1.

The server 100 receives transmitting data conforming to a VoIP, i.e., VoIP data from the VoIP apparatuses 10, 20... and 50, and transmits the received transmitting data to receiving VoIP apparatuses 10, 20... and 50 based on the VoIP data by Internet 1.

In the communication system according to the present invention, for example, the first VoIP apparatus 10 receives a text message from the first mobile phone 70a located within a range capable of having short-range communication therewith, and transmits the VoIP data including the text message and destination information to the server 100 through Internet 1. Then, the server 100 transmits the VoIP data to the second VoIP apparatus 20 corresponding to the destination information of the VoIP data. Accordingly, the second VoIP apparatus 20 and mobile phones that are located within a range capable of having short-range communication with the second VoIP apparatus 20 (for example, the third mobile phone 70c) can receive the VoIP data including the text message and the destination information.

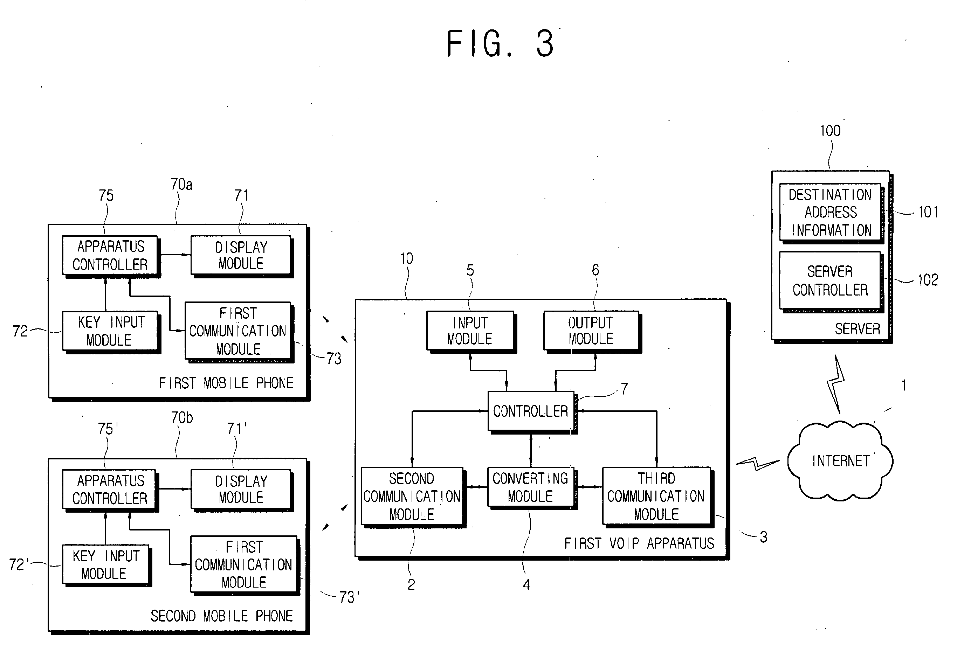

Each operation of the wireless communication apparatuses, the first and second mobile phones 70a and 70b, the first VoIP apparatus 10, and the server 100 according to the first exemplary embodiment of the present invention will be hereinafter described with reference to a control block diagram of FIG. 3.

The first mobile phone 70a includes a key input module 72 having various text keys including numeral keys, letter keys such as English and/or Korean letter keys, etc., a display module 71 which displays a text message input through the key input module 72, a text message received from another mobile phone, and/or content information received from various mobile communication companies, a first communication module 73 to perform short-range communication with the first VoIP apparatus 10, and an apparatus controller 75 which controls the key input module 72, the display module 71, and the first communication module 73 to generally perform a telephony function, a text input function, and the like in the first mobile phone 70a.

When a user transmits a text message by manipulating the key input module 72 in a VoIP communication mode, for example, when the user inputs the text message in the VoIP communication mode instead of an SMS communication mode, the apparatus-controller 75 transmits transmitting data including pointing data to the first VoIP apparatus 10 through the first communication module 73. At this time, the pointing data points out that a current-input communication mode is the VoIP communication mode.

Here, when the user inputs the text message by manipulating the key input module 72, it is preferable but not necessary that the user further inputs a transmitter's number, i.e., an identification number of the first mobile phone 70a, and a receiver's number, i.e., an identification number of the third mobile phone 70c, so that the transmitting data including the pointing data and the text message can further include the transmitter's number and the receiver's number. Here, the receiver's number may be destination information on the transmitting wireless communication (for example, the third mobile phone 70c) to receive the text message. In particular, the identification number of the receiving wireless communication apparatus, i.e., the receiving mobile phone, may preferably be its telephone number, but not necessarily.

When the transmitting data is received from the first VoIP apparatus 10 through the first communication module 73, the apparatus controller 75 controls the display module 71 to display the text message based on the transmitting data thereon.

The second mobile phone 70b, which has the same configuration as the first mobile phone 70a or performs an operation corresponding to that of the first mobile phone 70a, includes a key input module 72', a display module 71', a first communication module 73', and an apparatus controller 75'. The double description thereof will be omitted as necessary.

The first VoIP apparatus 10 includes a second communication module 2 which performs short-range communication with the first communication modules 73 and 73' of the first and second mobile phones 70a and 70b, respectively, a third communication module 3 which performs VoIP communication with other VoIP apparatuses 20, 30, 40, and 50 through connecting with Internet 1, a converting module 4 which converts transmitting data conforming to a wireless protocol into transmitting data conforming to a VoIP, or converts transmitting data conforming to the VoIP into transmitting data conforming to the wireless protocol, and a controller 7 which generally controls an operation of the first VoIP apparatus 10. At this time, in the converting module 4, the transmitting data conforming to the wireless protocol is transmitted through the second communication module 2, and the transmitting data conforming to the VoIP is transmitted through the third communication module 3.

Here, short-range communication between the first communication modules 73 and 73' and the second communication module 2 may include one of infrared communication employing an infrared signal, ultrasonic communication employing an ultrasonic signal, and Bluetooth communication. In particular, it is preferable but not necessary that the first communication modules 73 and 73' and the second communication module 2, are one of an infrared communication module, an ultrasonic communication module, and a Bluetooth communication module. Hereinafter, the transmitting data received or transmitted between the first communication modules 73 and 73' and the second communication module 2 will be referred to as "wireless data."

Wireless data between the first mobile phone 70a and the first VoIP apparatus 10 conforming to various protocols may be transmitted. At this time, the various protocols must be suitable for a relevant communication protocol standard. For example, when the wireless data between the first mobile phone 70a and the first VoIP apparatus 10 are transmitted through the infrared communication, the infrared communication may be conformed to the same protocol as a remote controller of a general electronic apparatus to use a hexadecimal code.

The controller 7 controls the converting module 4 to convert the wireless data, i.e., the transmitting data conforming to a wireless protocol, which is transmitted through the second communication module 2, into transmitting data conforming to the VoIP to transmit them through the third communication module 3. Also, the controller 7 controls the converting module 4 to convert the transmitting data conforming to the VoIP, which is transmitted through the third communication module 3, into transmitting data conforming to the wireless protocol to transmit them through the second communication module 2. Hereinafter, the transmitting data conforming to the VoIP, which the wireless transmitting data conforming to the wireless protocol is converted to, will be referred to as "VoIP data."

In particular, when the first VoIP apparatus 10 receives the wireless data from the first mobile phone 70a through the second communication module 2, the controller 7 controls the converting module 4 to convert the received wireless data into the VoIP data. Also, the controller 7 controls the third communication module 3 to transmit the converted VoIP data to the server 100. As a result, the first VoIP apparatus 10 receives a text message from the first mobile phone 70a and transmits the received text message to the server 100 by using the VoIP communication environment.

Here, the controller 7 undergoes a predetermined validation process so that the first VoIP apparatus 10 can be connected to the server 100. Also, when the first VoIP apparatus 10 is connected to the server 100, the controller 7 transmits an identification address of the first VoIP apparatus 10 to the server 100.

Accordingly, when the controller 7 converts the wireless data transmitted through the second communication module 2 into VoIP data to be transmitted to the server 100, the controller 7 checks whether the first VoIP apparatus 10 is connected to the server 100 through the validation process. As a result of checking the connection, when the first VoIP apparatus 10 is connected to the server 100 through the validation process, the controller 7 transmits the converted VoIP data to the server 100 as described above. When the controller 7 is not connected to the server 100 through the validation process, the controller 7 temporally stores the converted VoIP data and stands by. Then, when the controller 7 is connected to the server 100 through the validation process, the controller 7 controls the third communication module to transmit the VoIP data to the server 100. That is, while the controller 7 is not connected to the server 100 through the validation process, if the first VoIP apparatus 10 receives wireless data from first and second mobile phones 70a and 70b and converts the received wireless data into VoIP data, the controller 7 cannot immediately transmit the VoIP data to the server 100 and thus temporally stores the converted VoIP data, and then stands by. When the controller 7 is connected to the server 100 through the validation process later, the controller 7 transmits the VoIP data to the server 100.

At this time, the validation process is defined as a process to permit the first VoIP apparatus 10 to be connected to the server 100 by inputting a user's identification (ID) and password.

In the case where wireless data including a text message, which another mobile phone (for example, the third mobile phone 70c) transmits to the first mobile phone 70a, is converted into VoIP data in the second VoIP apparatus 20, when the first VoIP apparatus 10 receives the VoIP data, the controller 7 controls the converting module 4 to reconvert the received VoIP data into wireless data.

It is preferable but not necessary that the controller 7 determines whether the received VoIP data includes a text message or VoIP video telephony data. For example, when the received VoIP data includes the text message, the wireless data transmitted from the third mobile phone 70c includes the pointing data. Here, as described above, the pointing data points out an input communication mode of the transmitting wireless communication apparatus (for example, the third mobile phone 70c). Then, the wireless data is converted into the received VoIP data. Accordingly, the received VoIP data includes the pointing data. Thus, the controller 7 can determine whether the received VoIP data includes a text message by checking whether the received VoIP data includes the pointing data.

The controller 7 controls the second communication module 2 to transmit the wireless data converted in the converting module 4 to the first VoIP apparatus 10 through short-range communication. Accordingly, the first mobile phone 70a, which is located within a predetermined range capable of having short-range communication with the first VoIP apparatus 10, receives the wireless data from the first VoIP apparatus 10 and displays the text message included in the received wireless data on the display module 71.

At this time, in addition to the text message transmitted from the third mobile phone 70c, if the VoIP data, which was received through the third communication module 3, includes the receiver's number, the converted wireless data also includes the receiver's number. Accordingly, the apparatus-controllers 75 and 75' of the first and second mobile phones 70a and 70b, respectively, checks an identification number of a receiver, i.e., destination information based on the received wireless data. When the checked identification number is identical to one of the apparatus-controllers 75 and 75', the apparatus-controller 75 or 75' displays the text message included in the received wireless data on the display parts 71 and 71'. In other words, when the identification number corresponding to the destination information of the received wireless data is identical to that of the first mobile phone 70a, only the first mobile phone 70a of the first and second mobile phones 70a and 70b, which are located in a range capable of having short-range communication with the first VoIP apparatus 10, displays the text message on the display module 71.

It is preferable but not necessary that the first VoIP apparatus 10 support a general VoIP video telephony function. Particularly, the first VoIP apparatus 10 may include a configuration to have a two-way communication with other VoIP apparatuses 20, 30, 40, and 50 by converting sound and video data into an IP data packet and controlling the third communication module 3 to transmit the IP data packet to other VoIP apparatuses 20, 30, 40, and 50 via Internet 1.

Herein, the first VoIP apparatus 10 may include an input module 5 and an output module 6. The input module 5 may include a key input module (not shown) having various text keys including a letter key and a numeral key, a camera module (not shown) to take a video, and a microphone (not shown) module to receive a sound. The output module 6 may include a speaker (not shown) and a display (not shown).

When the VoIP data received through the third communication module 3 includes the VoIP video telephony data, that is when the VoIP data received from the third communication module 3 does not include the text message, the controller 7 parses, decompresses and decodes the received VoIP data as general processes, and then outputs the processed VoIP data through the output module 6. Also, the controller 7 processes video and sound data input through the input module 5, and transmits the video and sound data to other VoIP apparatuses through the third communication module 3. Accordingly, the first VoIP apparatus 10 can have VoIP video telephony communication with one of other VoIP apparatus 20, 30, 40, and 50.

Further, when the VoIP data received through the third communication module 3 includes a text message, the controller 7 detects the text message from the received VoIP data and displays the text message on the display (not shown) of the output module 6.

The server 100 receives VoIP data from other VoIP apparatuses 10, 20, 30, 40, and 50 via Internet 1, and transmits the VoIP data to one of the other VoIP apparatuses 10, 20, 30, 40, and 50 corresponding to destination information based on the received VoIP data.

The server 100 stores destination address information 101 having a plurality of destination information, i.e., identification addresses of the plurality VoIP apparatuses 10, 20, 30, 40, and 50 corresponding to a concerned mobile phone by identification number. The identification address of the VoIP apparatus may include an Internet Protocol (IP) address thereof.

In particular, the server 100 includes a server controller 102. When the server 100 receives VoIP data from the first VoIP apparatus 10, the server controller 102 determines the concerned VoIP apparatus (for example, the second VoIP apparatus 20) to have short-range communication with the receiving wireless communication apparatus (for example, the third mobile phone 70c) having the identification number corresponding to the destination information of the received VoIP data based on the VoIP data and the stored destination address information 101, and transmits the VoIP data to the second VoIP apparatus 20.

An operation that the server controller 102 transmits the VoIP data to the second VoIP apparatus 20 will be described in detail as follows. The server controller 102 checks whether the second VoIP apparatus 20, chosen depending on the destination information of the received VoIP data, is connected to the server 100 through the VoIP communication. As a result of checking, when the second VoIP apparatus 20 is connected to the server 100 through VoIP communication, the server controller 102 transmits the VoIP data to the second VoIP apparatus 20. When the second VoIP apparatus 20 is not connected to the server 100, the server controller 102 does not transmit and temporally store the VoIP data. Then, when the second VoIP apparatus 20 is again connected to the server 100 through a predetermined validation process, the server controller 102 transmits the VoIP data to the second VoIP apparatus 20.

Particularly, when the server controller 102 receives an identification address from a VoIP apparatus (for example, the first VoIP apparatus 10) that is connected to the server 100 through the predetermined validation process, the server controller 102 replaces the identification address of the first VoIP apparatus previously stored in the destination address information 101 with the new-received identification address. Particularly, in a moving IP environment, to transmit a text message to a VoIP apparatus corresponding to destination information of a transmitting wireless communication apparatus, the server controller 102 may replace an identification address previously stored in the destination address information 101 with the new-received identification address from the VoIP apparatus whenever the VoIP apparatus is connected to the server 100.

Thus, in a VoIP communication system according to a first exemplary embodiment of the present invention, when a user inputs a text message and destination information through a wireless communication apparatus, the wireless communication apparatus can transmit the transmitting data including the text message and the destination information to a receiving wireless communication apparatus corresponding the destination information through the first VoIP apparatus 10, the server 100, and the second VoIP apparatus 20.

On the other hand, in the communication system according to the first exemplary embodiment of the present invention, a text message between wireless communication apparatuses can be transmitted or received through one as well as both of the first and second VoIP apparatuses. For example, when the first mobile phone 70a transmits a text message and its destination information (for example, an identification number of the second mobile phone 70b) to the first VoIP apparatus 10, the first VoIP apparatus 10 transmits VoIP data including the text message and the identification number to the sever 100. Then, the server 100 transmits the VoIP data to the first VoIP apparatus 10 again based on the destination address information 101. The first VoIP apparatus 10 converts the received VoIP data into wireless data and transmits the wireless data to the second mobile phone 70b. Accordingly, the second mobile phone 70b can receive the text message that the first mobile phone 70a transmits to the second mobile phone 70b.

Thus, in the VoIP communication system according to the first exemplary embodiment of the present invention, the VoIP communication can reduce a using fee to transmit or receive a text message between wireless communication apparatuses by using a wireless communication apparatus employing VoIP communication between VoIP apparatuses. Further, a user input method of the VoIP communication system is not different from that of the conventional SMS communication system because the VoIP communication system receives a text message, a transmitter's number, and a receiver's number from a wireless communication apparatus, and transmits the text message to a receiving wireless communication apparatus corresponding to the receiver's number. Accordingly, a user does not recognize a difference between the VoIP communication system and the conventional SMS communication system, and thus does not experience any inconvenience for transmitting or receiving the text message.

In particular, when the second mobile phone 70b can receive the text message that the first mobile phone 70a transmits to the second mobile phone 70b, the controller 7 stores at least one of identification numbers corresponding to the first and second mobile phones 70a and 70b that have short-range communication with the first VoIP apparatus 10 through the second communication module 2. That is, the controller 7 stores a phone number, i.e., identification number of the first mobile phone 70a and/or the second mobile phone 70b, that has ever had short-range communication with the first VoIP apparatus 10. As shown in FIG. 1, even though the fourth mobile phone 70d is not located within a range capable having short-range communication with the first VoIP apparatus 10, if the fourth mobile phone 70d had ever had short-range communication with the first VoIP apparatus 10, the controller 7 would have stored the phone number of the fourth mobile phone 70d.

Further, when the first VoIP apparatus 10 has short-range communication with a mobile phone, that is connected thereto through the second communication module 2, the controller 7 determines whether the current-connected mobile phone corresponds to a previous identification number or a new identification number by checking a transmitter's number based on wireless data that the mobile phone (for example, the second mobile phone 70b) connected thereto through the second communication module 2 transmits to the first VoIP apparatus 10. As the result of determining whether the current-connected mobile phone corresponds to a previous identification number or a new identification number, when the second mobile phone number 70b has a new identification number, i.e., a new phone number that has never been stored in the first VoIP apparatus 10, the controller 7 transmits the identification address of the first VoIP apparatus 10 and the new identification number, i.e., the phone number of the second mobile phone 70b, to the server 100 through the third communication module 3.

When the server controller 102 receives the identification address of the first VoIP apparatus 10 and the new identification number from the first VoIP apparatus 10, the server controller 102 updates the destination address information 101 by correlating the identification address and the new identification number.

Thus, when a user transmits text message to a new wireless communication apparatus, the VoIP communication system according to the first exemplary embodiment of the present invention can more efficiently transmit or receive the text message to or from the new receiving wireless communication apparatus in the VoIP environment by adding the phone number of the new wireless communication apparatus into the server.

As described above, in the first exemplary embodiment of the present invention, the present invention has been described with reference to the first VoIP apparatus 10 by way of an example. However, other VoIP apparatuses 20, 30, 40, and 50, respectively have the same configuration as the first VoIP apparatus 10.

In the configuration of the above-described VoIP communication system, when VoIP data, including a text message and destination information, is input to the first VoIP apparatus 10 through the input module 5 thereof, the first VoIP apparatus 10 transmits the VoIP data to the server 100. Accordingly, a VoIP apparatus (for example, the third VoIP apparatus 30) and a wireless communication apparatus having short-range communication with the third VoIP apparatus 30 (for example, the fourth mobile phone 70d) corresponding to the destination information can display the text message.

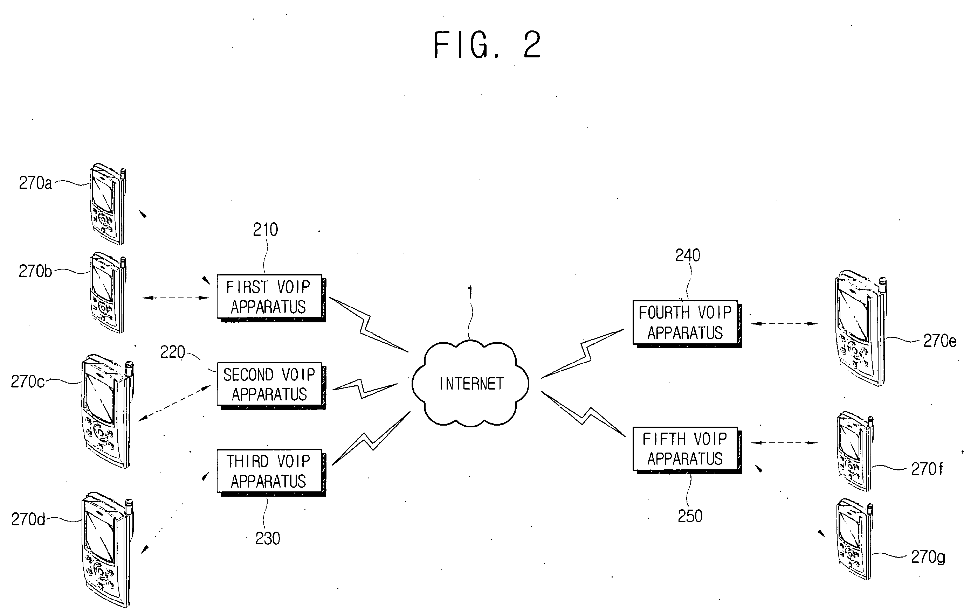

Hereinafter, a VoIP communication system according to a second exemplary embodiment of the present invention without a server 100 will be briefly described with reference to FIG. 2.

As illustrated in FIG. 2, the VoIP communication system according to the second exemplary embodiment of the present invention includes wireless communication apparatuses 270a, 270b... and 270g which are capable of short-range communication and to transmit transmitting data including destination information, and VoIP apparatuses 210, 220... and 250 which are capable of performing short-range communication with the wireless communication apparatuses 270a, 270b... and 270g and perform VoIP communication with other VoIP apparatuses 210, 220... and 250.

In particular, the wireless communication apparatuses 270a, 270b... and 270g include an apparatus capable of wireless communication such as mobile phones, PDAs, and the like. Hereinafter, the VoIP communication according to the second exemplary embodiment of the present invention will be described with reference to a mobile phone by way of representative example of the wireless communication apparatus. The same or almost same description of a configuration of the mobile phone as the mobile phone of the first exemplary embodiment will be omitted in the second exemplary embodiment of the present invention.

When a user inputs text message through a key input module (not shown) in a VoIP communication environment, a first wireless communication apparatus 270a transmits wireless data, i.e., transmitting data including the input text data and pointing data to a first VoIP apparatus 210 located within a predetermined range capable of short-range communication. Here, the pointing data point out that the current-input mode is a VoIP communication mode.

At this time, when the user inputs the text message to the wireless communication apparatus 270a, i.e., the first mobile phone 270a through the key input module (not shown), the user further inputs a transmitter's number, i.e., an identification number of the first mobile phone 270a to transmit the text message, and an identification address of a receiving VoIP apparatus (for example, a second VoIP apparatus 220) as destination information of the second VoIP apparatus 220. It preferable but not necessary that the wireless data including the pointing data and the text message further includes the transmitter's number and the receiver's number. Further, preferably but not necessarily, the identification address of the VoIP apparatus includes an IP address.

The VoIP apparatuses 210, 220... and 250 may have two-way communication with each other by converting sound data into an Internet protocol data packet and transmitting or receiving the Internet protocol data packet to or from each other by Internet 1. Herein, it is preferable but not necessary that the respective VoIP apparatuses 210, 220... and 250 includes a video telephone having a VoIP function that has two-way communication with another video telephone having the same by processing at least one of sound and video data. The same or almost same description of the VoIP apparatuses 210, 220... and 250 as the VoIP apparatuses 10, 20... and 50 of the first exemplary embodiment will be omitted in the second exemplary embodiment of the present invention.

When the first VoIP apparatus 210 receives wireless data from the first mobile phone 270a, the first VoIP apparatus 210 controls a converting module (not shown) to convert the received wireless data into VoIP data conforming to a VoIP. Then, the first VoIP apparatus 210 transmits the VoIP data to a receiving VoIP apparatus (for example, the second VoIP apparatus 220) having an identification address based on destination information of the wireless data, i.e., the identification address corresponding to the receiver's number through the VoIP communication.

On the other hand, when the second VoIP apparatus 220 receives another wireless data including a text message from another mobile phone (for example, a third mobile phone 270c), the second VoIP apparatus 220 converts the wireless data into VoIP data and transmits the converted VoIP data to the first VoIP apparatus 210 through VoIP communication. Then, the first VoIP apparatus 210 receives the VoIP data through VoIP communication, and controls the converting module to reconvert the received VoIP data into wireless data. The first VoIP apparatus 210 transmits the reconverted wireless data to the first mobile phone 270a and/or the second mobile phone 270b through short-range communication. Accordingly, the first mobile phone 270a and/or the second mobile phone 270b, which are located within a range capable of having short-range communication with the first VoIP apparatus 210, receives the reconverted wireless data from the first VoIP apparatus 210, and display the text message of the received wireless data.

Here, the respective VoIP apparatuses 210, 220... and 250 may include a display module (not shown). Also, when the VoIP apparatuses 210, 220... and 250 receive the VoIP data including the text messages, the VoIP apparatuses 210, 220... and 250 may process the text messages of the VoIP data, and display the processed text messages to display parts (not shown).

In the VoIP communication system according to the second exemplary embodiment of the present invention, as described above, when a user inputs text message into the first mobile phone 270a to transmit the text message to the second VoIP apparatus 220, the user should input the identification address of the second VoIP apparatus 220 together with the text message on the assumption that the user has already knows the identification address, i.e., IP address of the receiving VoIP apparatus (for example, the second VoIP apparatus 220). Accordingly, in the VoIP communication system according to the second exemplary embodiment of the present invention, it is preferable but not necessary that the identification address may be a fixed IP address.

As described above, in the second exemplary embodiment of the present invention, the present invention has been described with reference to the first VoIP apparatus 210 by way of example. However, other VoIP apparatuses 220, 230, 240, and 250, respectively have the same configuration as the first VoIP apparatus 210.

The VoIP communication system according to the second exemplary embodiment of the present invention without an additional server can reduce a using fee to transmit or receive a text message between wireless communication apparatuses by using the wireless communication apparatus employing the VoIP communication between VoIP apparatuses.

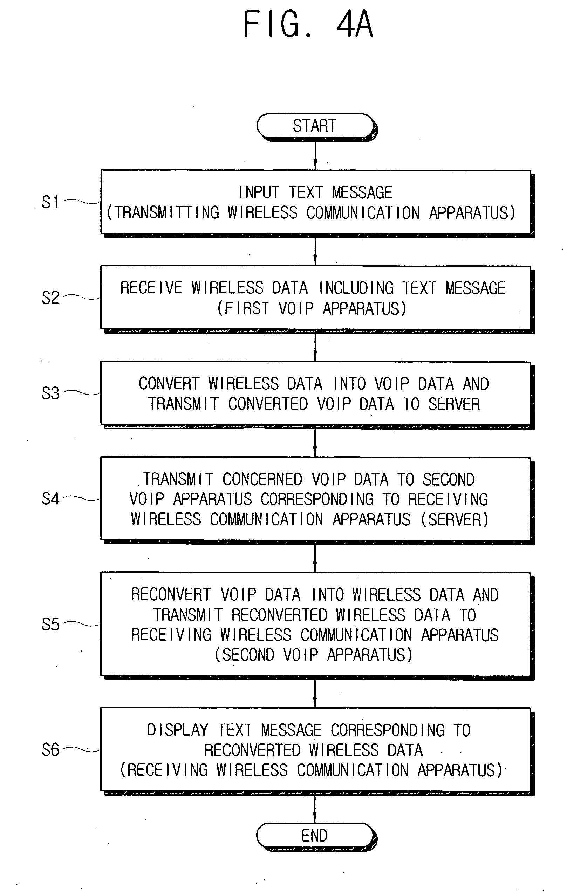

Hereinafter, a data communication operation in the VoIP communication system according to the first exemplary embodiment of the present invention will be described with reference to FIGS. 4A through 4B. At this time, the control block of a wireless communication apparatus, a first VoIP apparatus, and a server in the FIG. 3 will be also referred to by way of example.

First, the data communication operation in the VoIP communication system according to the first exemplary embodiment of the present invention will be briefly described with reference to FIG. 4A.

When a user inputs text message into a wireless communication apparatus (for example, a first mobile phone 70a) (S1), the first mobile phone 70a transmits transmitting data including the input text message, i.e., wireless data to the first VoIP apparatus 10 through short-range communication. Then, the first VoIP apparatus 10 receives the wireless data (S2).

The first VoIP apparatus 10, which receives the wireless data from the first mobile phone 70a, converts the received wireless data into VoIP data, and transmits the converted VoIP data to the server 100 (S3). The server 100 transmits the VoIP data received from the first VoIP apparatus 10 to another VoIP apparatus (for example, a second VoIP apparatus 20) that has short-range communication with a receiving wireless communication apparatus (for example, a third mobile phone 70c) corresponding to the received VoIP data (S4).

Then, the VoIP apparatus that receives the VoIP data transmitted from the server 100, i.e., the second VoIP apparatus 20, reconverts the VoIP data into wireless data, and transmits the reconverted wireless data to the receiving wireless communication apparatus, i.e., the third mobile phone 70c, through short-range communication (S5). Accordingly, the third mobile phone 70c processes the wireless data and displays the text message corresponding to the processed wireless data (S6).

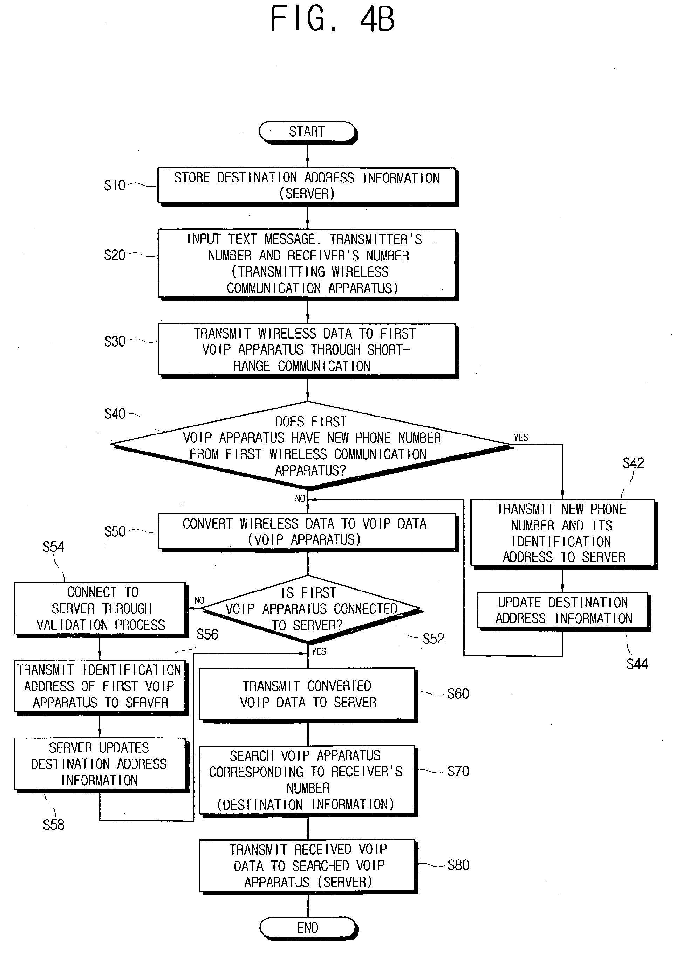

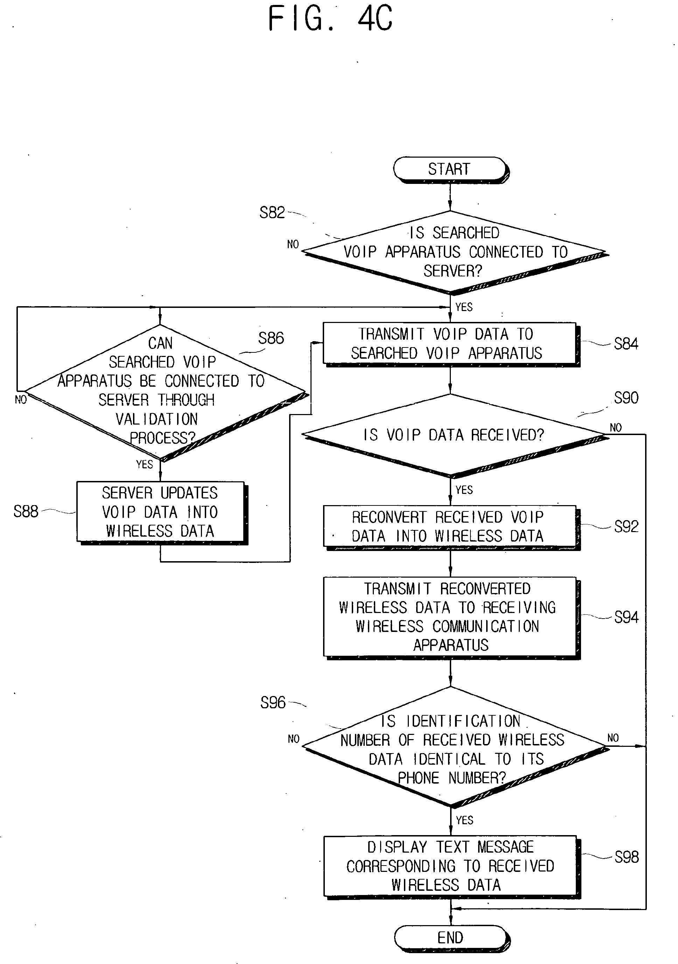

In particular, the data communication operation in the communication system of FIG. 4A will be hereinafter described with reference to FIGS. 4B and 4C.

As shown in FIG. 4B, in an operation that a transmitting wireless communication apparatus transmits wireless data including a text message, first, the server 100 stores destination address information 101 where a plurality of destination information, which are the identification addresses, i.e., IP addresses, of the plurality of VoIP apparatuses 10, 20, 30, 40, and 50 corresponding to receiving mobile phones are stored by the identification numbers of the receiving mobile phones (S10). A user inputs text message, a transmitter's number, and a receiver's number into a transmitting wireless communication apparatus (for example, the first mobile phone 70a) (S20). The transmitter's number may include a phone number of the first mobile phone 70a, and the receiver's number may include a phone number of a receiving wireless communication apparatus as destination information of a receiving wireless communication apparatus.

The first mobile phone 70a transmits transmitting data including the text message, the transmitter's number, and the receiver's number, i.e., wireless data, to the first VoIP apparatus 10 (S30). On the other hand, the VoIP apparatuses 10, 20, 30, 40, and 50 store the identification numbers of the wireless communication apparatuses, i.e., the mobile phones, that have short-range communication therewith, which are not shown in FIG. 4B. That is, the respective VoIP apparatus 10, 20, 30, 40, and 50 stores phone numbers of mobile phones that have ever had short-range communication therewith.

Then, the first VoIP apparatus 10, which receives the wireless data from the first mobile phone 70a, determines whether to store a new phone number or to use a previously stored phone number from the first mobile phone 70a by comparing the transmitter's phone number comprised in the received wireless data with pre-stored phone numbers of mobile phones that that has ever had short-range communication with the first VoIP apparatus 10 (S40).

As the result of determining whether to store a new phone number or to use a previously stored phone number, when the first VoIP apparatus 10 stores a new phone number from the first mobile phone 70a, the first VoIP apparatus 10 transmits the new phone number and its identification address, i.e., its IP address, to the server 100 (S42). Then, the server 100 may update the destination address information 101 by storing the IP address of the first VoIP apparatus 10 correlated with the phone number of the first mobile phone 70a (S44).

When the first VoIP apparatus 10 has previously stored the phone number of the first mobile phone 70a, the first VoIP apparatus 10 converts the received wireless data into VoIP data conforming to a VoIP (S50). Also, the first VoIP apparatus 10 determines it is connected to the server 100 through a validation process (S52).

When the first VoIP apparatus 10 is not connected to the server 100 through the validation process, the first VoIP apparatus 10 does not transmit the converted wireless data to the server 100, and the first VoIP receives an ID and password from a user. Then, the first VoIP apparatus 10 is connected to the server 100 through a predetermined validation process by inputting the ID and password (S54). As a result, when the first VoIP apparatus 10 is connected to the server 100 through the predetermined validation process, the first VoIP apparatus 10 transmits the identification address, i.e., the IP address of the first VoIP apparatus, to the server 100 (S56). Accordingly, the server 100 can replace a previously stored IP address of the first VoIP apparatus 10 previously storedin the destination address information 101 with new-received IP address from the first VoIP apparatus 10 (S58).

In the operation S52, when the first VoIP apparatus 10 is connected to the server 100 through the validation process, the first VoIP apparatus 10 transmits the converted VoIP data to the server 100 (S60). The server 100, which receives the VoIP data from the first VoIP apparatus 10, searches a VoIP apparatus corresponding to a receiver's number based on the destination information of the VoIP data, i.e., the receiver's number and destination address information 101 (S70). Then, the server 100 transmits the received VoIP data to the searched VoIP apparatus (for example, the second VoIP apparatus) corresponding to the receiver's number (for example, the phone number of the third mobile 70c) (S80).

Also, an operation that the server 100 transmits the VoIP data and another operation that a receiving wireless communication apparatus receives the text message will be hereinafter described with reference to FIG. 4C.

First, in the operation S80 the server 100 transmits the VoIP data to the searched VoIP apparatus, particularly, the server 100 determines whether the searched VoIP apparatus (for example, the second VoIP apparatus 20) is connected thereto through the validation process (S82).

As the result of determining determines whether the searched VoIP apparatus is connected thereto, when the second VoIP apparatus 20 is not connected to the server 100 through the validation process, the server 100 determines whether the second VoIP apparatus 20 can be connected thereto through the validation process (S86). In operation S86, when the second VoIP apparatus 20 can be connected to the server 100 through the validation process, the second VoIP apparatus 20 performs operations S54 and S56 of FIG. 4B so as to be connected to the server 100. Then, when the second VoIP apparatus 20 is connected to the server 100 again, the server 100 receives the identification address, i.e., the IP address of the second VoIP apparatus 20, and updates the destination address information 101 by replacing the corresponding previously stored identification address with the new-received identification address (S88) . Operation S88 may corresponds to operation S58 of FIG. 4B.

In operation S82, when the second VoIP apparatus 20 is connected to the server 100, the server 100 transmits the VoIP data to the second VoIP apparatus 20 (S84).

The plurality of VoIP apparatuses 10, 20, 30, 40, and 50 determine whether to receive the VoIP data from the server 100 (S90). A VoIP apparatus that receives the VoIP data from the server 100, i.e., the second VoIP apparatus 20, reconverts the VoIP data into wireless data (S92). Then, the second VoIP apparatus 20 transmits the reconverted wireless data to a receiving wireless communication apparatus, i.e., the third mobile phone 70c through short-range communication (S94). Then, the third mobile phone 70c which receives the reconverted wireless data checks whether the identification number of the wireless data is identical to its phone number (S96). As the result of checking whether the identification number of the wireless data is identical to its phone number, when the identification number of the wireless data is identical to its phone number, the third mobile phone 70c processes the wireless data and displays the text message corresponding to the wireless data (S98).

Thus, in the VoIP communication system according to the first exemplary embodiment of the present invention, the VoIP communication can reduce a using fee to transmit or receive a text message between wireless communication apparatuses by using a wireless communication apparatus employing a VoIP communication between VoIP apparatuses. Further, a user does not recognize a difference between the VoIP communication system and the conventional SMS communication system, and thus does not experience any inconvenience for transmitting or receiving text message.

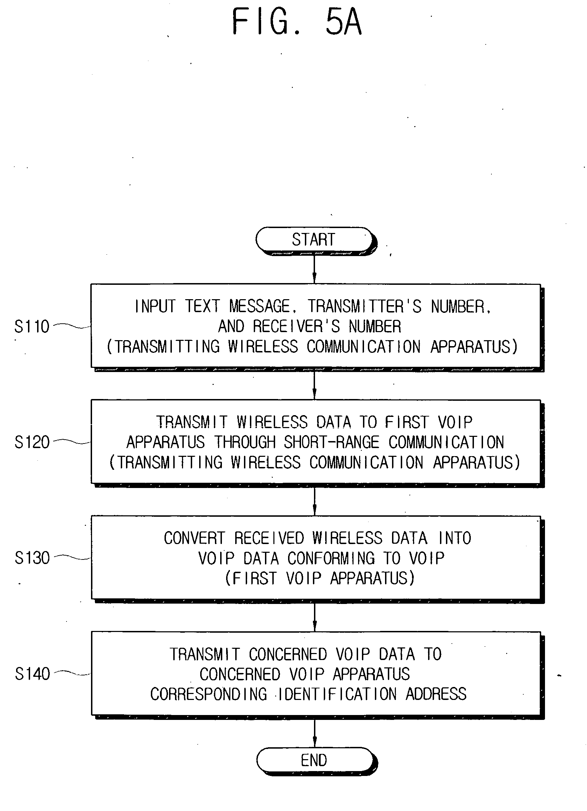

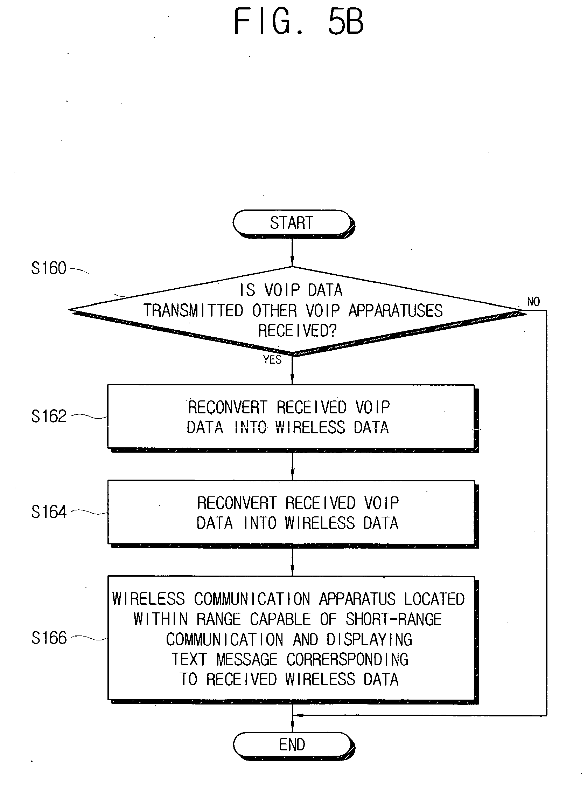

Hereinafter, a data communication operation in a communication system according to a second exemplary embodiment of the present invention will be described with reference to FIGS. 5A and 5B.

First, an operation that a transmitter's wireless communication apparatus transmits a text message will be described with reference to FIG. 5A.

A user inputs text message, a transmitter's number, and a receiver's number into a transmitting wireless communication apparatus (for example, a first mobile phone 270a) (S110). The transmitter's number may include a phone number of the first mobile phone 270a, and the receiver's number may include an IP address of a second VoIP apparatus 220 as destination information on a receiving wireless communication apparatus.

The first mobile phone 270a transmits wireless data, i.e., transmitting data including the text message, the transmitter's number, and the receiver's number, to a first VoIP apparatus 210 through short-range communication (S120).

The first VoIP apparatus 210, which receives the wireless data from the first mobile phone 270a, converts the received wireless data into VoIP data conforming to a VoIP (S130), and transmits the converted VoIP data to a VoIP apparatus (for example, the second VoIP apparatus 220) corresponding to an IP address of the receiver's number, i.e., destination information of the wireless data through a VoIP communication (S140).

Hereinafter, an operation that a receiving VoIP apparatus transmits the VoIP data will be described with reference to FIG. 5B. A plurality of VoIP apparatuses 10, 20, 30, 40, and 50 determine whether to receive the VoIP data that other VoIP apparatuses transmit through VoIP communication (S160). A concerned VoIP apparatus, i.e., the second VoIP apparatus 220, which receives the VoIP data from one of other VoIP apparatuses, i.e., the first VoIP apparatus 210, reconverts the received VoIP data into wireless data (S162), and transmits the reconverted wireless data through short-range communication (S164). Accordingly, a third mobile phone 270c, which is located within a predetermined range capable of having short-range communication with the second VoIP apparatus 220, may receive the wireless data from the second VoIP apparatus and display the text message corresponding to the received wireless data (S166).

Thus, the VoIP communication system according to the second exemplary embodiment of the present invention without an additional server 100 as shown in FIGS. 1 and 3 can reduce a using fee to transmit or receive a text message between wireless communication apparatuses by using a wireless communication apparatus employing VoIP communication between VoIP apparatuses.

As apparent from the above description, according to the exemplary embodiments of the present invention, there is provided a communication system, a VoIP apparatus, and a data communication method, which can reduce a using fee to transmit or receive a text message between wireless communication apparatuses by using a wireless communication apparatus employing VoIP communication between VoIP apparatuses.

Although a only few exemplary embodiments of the present invention have been shown and described, it will be appreciated by those skilled in the art that changes may be made in these embodiments without departing from the principles of the invention, the scope of which is defined in the appended claims.

## Claims

1. A communication system comprising:
a first Voice over Internet Protocol, VoIP, apparatus (10) adapted to receive transmitting data comprising an identification number of a receiving wireless communication apparatus and text message data from a transmitting wireless communication apparatus through short-range communication, and adapted to transmit the transmitting data through VoIP communication;
a second VoIP apparatus (20) adapted to receive the transmitting data through the VoIP communication, and adapted to transmit the transmitting data to the receiving wireless communication apparatus; and **characterized in** comprising:
a server (100) which comprises a server controller (102) stored with destination address information about identification addresses of the VoIP apparatuses and identification numbers of the wireless communication apparatuses, in which the identification addresses of the VoIP apparatuses correspond to the identification numbers of wireless communication apparatuses, and adapted to transmit the transmitting data to the second VoIP apparatus based on the transmitting data received from the first VoIP apparatus and the stored destination address information;
wherein the first VoIP apparatus (10) comprises a first controller (7) adapted to store an identification number of the transmitting wireless communication apparatus to perform the short-range communication with the first VoIP apparatus (10) as a new identification number, and adapted to transmit the identification address of the first VoIP apparatus (10) and the new identification number to the server (100) if it is determined that the identification number of the transmitting wireless communication apparatus had not been previously stored in the first VoIP apparatus (10),
the server controller (102) adapted to update the destination address information based on the received identification address of the first VoIP apparatus (10) and the new identification number.

2. The communication system according to claim 1, wherein the receiving wireless communication apparatus comprises a mobile phone or a PDA, and wherein the identification number comprises a phone number corresponding the mobile phone or PDA.

3. The communication system according to claim 1, wherein the first VoIP apparatus (10) comprises a first converting module (4) adapted to convert the transmitting data received through the short-range communication into transmitting data conforming to a VoIP to be transmitted through the VoIP communication.

4. The communication system according to claim 3, wherein the second VoIP apparatus (20) comprises a second converting module adapted to convert the transmitting data received through the VoIP communication into transmitting data conforming to a wireless protocol to be transmitted through the short-range communication.

5. The communication system according to claim 1, wherein the server controller (102) is adapted to transmit the transmitting data to the second VoIP apparatus (20) that corresponds to the identification number of the receiving wireless communication apparatus based on the transmitting data received from the first VoIP apparatus (10) and the stored destination address information.

6. The communication system according to claim 5, wherein the second VoIP apparatus (20) comprises a display module and a second controller adapted to process text message data from the transmitting data received through the VoIP communication and adapted to display a text message corresponding to the text message data on the display module.

7. The communication system according to claim 6, wherein the first controller (7) is adapted to control the first VoIP apparatus (10), undergo a validation process through the VoIP communication, connect to the server (100), and transmit the identification address of the first VoIP apparatus (10) to the server (100), and the second controller is adapted to control the second VoIP apparatus (20), undergo the validation process through the VoIP communication, connect to the server (100), and transmit the identification address of the second VoIP apparatus (20) to the server (100).

8. The communication system according to claim 7, wherein the server controller (102) is adapted to replace previously stored identification addresses of the first VoIP apparatus (10) and the second VoIP apparatus (20) corresponding to the destination address information with the respective identification addresses transmitted from the first VoIP apparatus (10) and the second VoIP apparatus (20) to be connected to the server (100) through the validation process.

9. The communication system according to claim 1, wherein the short-range communications between the transmitting wireless communication apparatus and the first VoIP apparatus (10) and between the receiving wireless communication apparatus and the second VoIP apparatus (20) comprise one of infrared communication, ultrasonic communication, and Bluetooth communication.

10. A data communication method to employ a communication between first and second Voice over Internet Protocol, VoIP, apparatuses, the data communication method comprising:
receiving transmitting data comprising an identification number of a receiving wireless communication apparatus and text message data from a transmitting wireless communication apparatus through short-range communication with the first VoIP apparatus (10);
the data communication method **characterized in** determining whether the received identification number has been previously stored in the first VoIP apparatus (10);
storing the received identification number in the first VoIP apparatus (10) as a new identification number if the received identification number of the transmitting wireless communication apparatus has not been previously stored in the first VoIP apparatus (10) and transmitting an identification address of the first VoIP apparatus (10) and said new identification number to a server (100),
wherein the server (100) comprises a server controller (102) stored with destination address information about identification addresses of the VoIP apparatuses and the identification numbers of the wireless communication apparatuses, in which the identification addresses of the VoIP apparatuses correspond to the identification numbers of the wireless communication apparatuses;
updating the destination address information based on new identification number destination address information based on the received identification address of the first VoIP apparatus (10) and the new identification number.
converting the transmitting data into transmitting data conforming to a VoIP;
transmitting the converted transmitting data to the server (100) through VoIP communication; and
transmitting the transmitting data from the server (100) to the second VoIP apparatus (20) based on the transmitting data received from the first VoIP apparatus (10) and the destination address information.

11. The data communication method according to claim 10, wherein the receiving wireless communication apparatus comprises a mobile phone or a PDA, and wherein the identification number comprises a phone number corresponding the mobile phone or PDA.

12. The data communication method according to claim 10, further comprising:
converting the received transmitting data into transmitting data conforming to a wireless protocol; and
transmitting the converted transmitting data through the short-range communication, if the second VoIP apparatus (20) receives the transmitting data from the server (100).

13. The data communication method according to claim 10, further comprising processing the received transmitting data and displaying a text message corresponding to the text message data, if the second VoIP apparatus (20) receives the transmitting data from the server (100).

14. The data communication method according to claim 10, further comprising:
connecting the second VoIP apparatus (20) to the server (100) through a predetermined validation process; and
transmitting the identification address of the second VoIP apparatus (20) to the server (100) from the second VoIP apparatus (20) that is connected to the server (100).

15. The data communication method according to claim 14, further comprising: replacing a corresponding previously stored identification address with a new-received identification address if the identification address is received from the second VoIP apparatus (20).

## Patentansprüche

1. Kommunikationssystem, umfassend:
eine erste Voice-over-Internet-Protokoll-, VoIP-, Vorrichtung (10), die angepasst ist, um Sendedaten, die eine Identifikationsnummer einer empfangenden drahtlosen Kommunikationsvorrichtung und Textmitteilungsdaten umfassen, aus einer sendenden drahtlosen Kommunikationsvorrichtung durch kurzreichweitige Kommunikation zu empfangen, und die angepasst ist, um die Sendedaten durch VoIP-Kommunikation zu senden;
eine zweite VoIP-Vorrichtung (20), die angepasst ist, um die Sendedaten durch die VoIP-Kommunikation zu empfangen, und die angepasst ist, um die Sendedaten an die empfangende drahtlose Kommunikationsvorrichtung zu senden; und **gekennzeichnet durch** Umfassen:
eines Servers (100), der einen Servercontroller (102) umfasst, in dem Zieladressinformationen über Identifikationsadressen der VoIP-Vorrichtungen und Identifikationsnummern der drahtlosen Kommunikationsvorrichtungen gespeichert sind, worin die Identifikationsadressen der VoIP-Vorrichtungen den Identifikationsnummern der drahtlosen Kommunikationsvorrichtungen entsprechen, und der angepasst ist, um die Sendedaten an die zweite VoIP-Vorrichtung zu senden auf Grundlage der aus der ersten VoIP-Vorrichtung empfangenen Sendedaten und der gespeicherten Zieladressinformationen;
wobei die erste VoIP-Vorrichtung (10) einen ersten Controller (7) umfasst, der angepasst ist, um eine Identifikationsnummer der sendenden drahtlosen Kommunikationsvorrichtung, die die kurzreichweitige Kommunikation mit der ersten VoIP-Vorrichtung (10) durchführt, als neue Identifikationsnummer zu speichern, und der angepasst ist, um die Identifikationsadresse der ersten VoIP-Vorrichtung (10) und die neue Identifikationsnummer an den Server (100) zu senden, falls festgestellt wird, dass die Identifikationsnummer der sendenden drahtlosen Kommunikationsvorrichtung nicht zuvor in der ersten VoIP-Vorrichtung (10) gespeichert worden ist,
der Servercontroller (102) angepasst ist, um die Zieladressinformationen auf Grundlage der empfangenen Identifikationsadresse der ersten VoIP-Vorrichtung (10) und der neuen Identifikationsnummer zu aktualisieren.

2. Kommunikationssystem nach Anspruch 1, wobei die empfangende drahtlose Kommunikationsvorrichtung ein Mobiltelefon oder einen PDA umfasst, und wobei die Identifikationsnummer eine Rufnummer umfasst, die dem Mobiltelefon oder dem PDA entspricht.

3. Kommunikationssystem nach Anspruch 1, wobei die erste VoIP-Vorrichtung (10) ein erstes Umwandlungsmodul (4) umfasst, das angepasst ist, um die durch die kurzreichweitige Kommunikation empfangenen Sendedaten zu VoIP-konformen Sendedaten umzuwandeln, die durch die VoIP-Kommunikation zu senden sind.

4. Kommunikationssystem nach Anspruch 3, wobei die zweite VoIP-Vorrichtung (20) ein zweites Umwandlungsmodul umfasst, das angepasst ist, um die durch die VoIP-Kommunikation empfangenen Sendedaten zu Drahtlosprotokoll-konformen Sendedaten umzuwandeln, die durch die kurzreichweitige Kommunikation zu senden sind.

5. Kommunikationssystem nach Anspruch 1, wobei der Servercontroller (102) angepasst ist, um die Sendedaten an die zweite VoIP-Vorrichtung (20), die der Identifikationsnummer der empfangenden drahtlosen Kommunikationsvorrichtung entspricht, zu senden auf Grundlage der aus der ersten VoIP-Vorrichtung (10) empfangenen Sendedaten und der gespeicherten Zieladressinformationen.

6. Kommunikationssystem nach Anspruch 5, wobei die zweite VoIP-Vorrichtung (20) ein Anzeigemodul und einen zweiten Controller umfasst, der angepasst ist, um Textmitteilungsdaten aus den durch die VoIP-Kommunikation empfangenen Sendedaten zu verarbeiten, und der angepasst ist, um eine den Textmitteilungsdaten entsprechende Textmitteilung auf dem Anzeigemodul anzuzeigen.

7. Kommunikationssystem nach Anspruch 6, wobei der erste Controller (7) angepasst ist, um die erste VoIP-Vorrichtung (10) zu steuern, einen Validierungsprozess durch die VoIP-Kommunikation zu durchlaufen, sich mit dem Server (100) zu verbinden, und die Identifikationsadresse der ersten VoIP-Vorrichtung (10) an den Server (100) zu senden, und der zweite Controller angepasst ist, um die zweite VoIP-Vorrichtung (20) zu steuern, den Validierungsprozess durch die VoIP-Kommunikation zu durchlaufen, sich mit dem Server (100) zu verbinden, und die Identifikationsadresse der zweiten VoIP-Vorrichtung (20) an den Server (100) zu senden.

8. Kommunikationssystem nach Anspruch 7, wobei der Servercontroller (102) angepasst ist, um zuvor gespeicherte Identifikationsadressen der ersten VoIP-Vorrichtung (10) und der zweiten VoIP-Vorrichtung (20), die den Zieladressinformationen entsprechen, durch die jeweiligen Identifikationsadressen zu ersetzen, die gesendet werden aus der ersten VoIP-Vorrichtung (10) und der zweiten VoIP-Vorrichtung (20), die mit dem Server (100) durch den Validierungsprozess zu verbinden sind.

9. Kommunikationssystem nach Anspruch 1, wobei die kurzreichweitigen Kommunikationen zwischen der sendenden drahtlosen Kommunikationsvorrichtung und der ersten VoIP-Vorrichtung (10) und zwischen der empfangenden drahtlosen Kommunikationsvorrichtung und der zweiten VoIP-Vorrichtung (20) Infrarotkommunikation oder Ultraschallkommunikation oder Bluetooth-Kommunikation umfassen.

10. Datenkommunikationsverfahren, das eine Kommunikation zwischen einer ersten und einer zweiten Voice-over-Internet-Protokoll-, VoIP-, Vorrichtung nutzt, wobei das Datenkommunikationsverfahren umfasst:
Empfangen von Sendedaten, die eine Identifikationsnummer einer empfangenden drahtlosen Kommunikationsvorrichtung und Textmitteilungsdaten aus einer sendenden drahtlosen Kommunikationsvorrichtung umfassen, durch kurzreichweitige Kommunikation mit der ersten VoIP-Vorrichtung (10);
wobei das Datenkommunikationsverfahren **gekennzeichnet ist durch**
Feststellen, ob die empfangene Identifikationsnummer zuvor in der ersten VoIP-Vorrichtung (10) gespeichert worden ist;
Speichern der empfangenen Identifikationsnummer in der ersten VoIP-Vorrichtung (10) als neue Identifikationsnummer, falls die empfangene Identifikationsnummer der sendenden drahtlosen Kommunikationsvorrichtung nicht zuvor in der ersten VoIP-Vorrichtung (10) gespeichert worden ist, und Senden einer Identifikationsadresse der ersten VoIP-Vorrichtung (10) und der neuen Identifikationsnummer an einen Server (100),
wobei der Server (100) einen Servercontroller (102) umfasst, in dem Zieladressinformationen über Identifikationsadressen der VoIP-Vorrichtungen und Identifikationsnummern der drahtlosen Kommunikationsvorrichtungen gespeichert sind, worin die Identifikationsadressen der VoIP-Vorrichtungen den Identifikationsnummern der drahtlosen Kommunikationsvorrichtungen entsprechen;
Aktualisieren der Zieladressinformationen auf Grundlage neuer Identifikationsnummerzieladressinformationen beruhend auf der empfangenen Identifikationsadresse der ersten VoIP-Vorrichtung (10) und der neuen Identifikationsnummer;
Umwandeln der Sendedaten zu VoIP-konformen Sendedaten;
Senden der umgewandelten Sendedaten an den Server (100) durch VoIP-Kommunikation; und
Senden der Sendedaten aus dem Server (100) an die zweite VoIP-Vorrichtung (20) auf Grundlage der aus der ersten VoIP-Vorrichtung (10) empfangenen Sendedaten und der Zieladressinformationen.

11. Datenkommunikationsverfahren nach Anspruch 10, wobei die empfangende drahtlose Kommunikationsvorrichtung ein Mobiltelefon oder einen PDA umfasst, und wobei die Identifikationsnummer eine Rufnummer umfasst, die dem Mobiltelefon oder dem PDA entspricht.

12. Datenkommunikationsverfahren nach Anspruch 10, das weiterhin umfasst:
Umwandeln der empfangenen Sendedaten zu Drahtlosprotokoll-konformen Sendedaten; und
Senden der umgewandelten Sendedaten durch die kurzreichweitige Kommunikation, falls die zweite VoIP-Vorrichtung (20) die Sendedaten aus dem Server (100) empfängt.

13. Datenkommunikationsverfahren nach Anspruch 10, das weiterhin das Verarbeiten der empfangenen Sendedaten und das Anzeigen einer den Textmitteilungsdaten entsprechenden Textmitteilung umfasst, falls die zweite VoIP-Vorrichtung (20) die Sendedaten aus dem Server (100) empfängt.

14. Datenkommunikationsverfahren nach Anspruch 10, das weiterhin umfasst:
Verbinden der zweiten VoIP-Vorrichtung (20) mit dem Server (100) durch einen vorgegebenen Validierungsprozess; und
Senden der Identifikationsadresse der zweiten VoIP-Vorrichtung (20) an den Server (100) aus der zweiten VoIP-Vorrichtung (20), die mit dem Server (100) verbunden ist.

15. Datenkommunikationsverfahren nach Anspruch 14, das weiterhin umfasst: Ersetzen einer entsprechenden zuvor gespeicherten Identifikationsadresse durch eine neu empfangene Identifikationsadresse, falls die Identifikationsadresse aus der zweiten VoIP-Vorrichtung (20) empfangen wird.

## Revendications

1. Système de communication comprenant :
un premier appareil à Protocole de Voix sur Internet, VoIP, (10) adapté pour recevoir des données de transmission comprenant :
un numéro d'identification d'un appareil de communication sans fil récepteur et des données de message textuel en provenance d'un appareil de communication sans fil émetteur par l'intermédiaire d'une communication à courte portée, et adapté pour transmettre les données de transmission par l'intermédiaire d'une communication par VoIP ;
un second appareil VoIP (20) adapté pour recevoir les données de transmission par l'intermédiaire de la communication par VoIP, et adapté pour transmettre les données de transmission à l'appareil de communication sans fil récepteur ; et **caractérisé en ce qu'**il comprend :
un serveur (100) qui comprend un contrôleur de serveur (102) dans lequel ont été stockées des informations d'adresse de destination relatives aux adresses d'identification des appareils VoIP et aux numéros d'identification des appareils de communication sans fil, dans lequel les adresses d'identification des appareils VoIP correspondent aux numéros d'identification des appareils de communication sans fil, et adapté pour transmettre les données de transmission au second appareil VoIP en fonction des données de transmission reçues en provenance du premier appareil VoIP et des informations d'adresse d'identification stockées ;
dans lequel le premier appareil VoIP (20) comprend un premier contrôleur (7) adapté pour stocker un numéro d'identification de l'appareil de communication sans fil émetteur devant réaliser la communication à courte portée avec le premier appareil VoIP (10) en tant que nouveau numéro d'identification, et adapté pour transmettre l'adresse d'identification du premier appareil VoIP (10) et le nouveau numéro d'identification au serveur (100) s'il a été déterminé que le numéro d'identification de l'appareil de communication sans fil émetteur n'a pas été précédemment stocké dans le premier appareil VoIP (10,
le contrôleur de serveur (102) est adapté pour actualiser les informations d'adresse de destination en fonction de l'adresse d'identification reçue du premier appareil VoIP (10) et du nouveau numéro d'identification.

2. Système de communication selon la revendication 1, dans lequel l'appareil de communication sans fil récepteur comprend un téléphone mobile ou un assistant numérique personnel (PDA), et dans lequel le numéro d'identification comprend un numéro de téléphone correspondant au téléphone mobile ou au PDA.

3. Système de communication selon la revendication 1, dans lequel le premier appareil VoIP (10) comprend un premier module de conversion (4) adapté pour convertir les données de transmission reçues par l'intermédiaire de la communication à courte portée en des données de transmission conformes à un protocole VoIP devant être transmis par l'intermédiaire de la communication par VoIP.

4. Système de communication selon la revendication 3, dans lequel le second appareil VoIP (20) comprend un second module de conversion adapté pour convertir les données de transmission reçues par l'intermédiaire de la communication par VoIP en des données de transmission conformes à un protocole sans fil devant être transmis par l'intermédiaire de la communication à courte portée.

5. Système de communication selon la revendication 1, dans lequel le contrôleur de serveur (102) est adapté pour transmettre les données de transmission au second appareil VoIP (20) correspondant au numéro d'identification de l'appareil de communication sans fil récepteur en fonction des données de transmission reçues en provenance du premier appareil VoIP (10) et des informations d'adresse de destination stockées.

6. Système de communication selon la revendication 5, dans lequel le second appareil VoIP (20) comprend un module d'affichage et un second contrôleur adapté pour traiter des données de message textuel à partir des données de transmission reçues par l'intermédiaire de la communication par VoIP et adapté pour afficher un message textuel correspondant aux données de message textuel sur le module d'affichage.

7. Système de communication selon la revendication 6, dans lequel le premier contrôleur (7) est adapté pour contrôler le premier appareil VoIP (10), est adapté pour subir un processus de validation par l'intermédiaire de la communication par VoIP, se connecter au serveur (100), et transmettre l'adresse d'identification du premier appareil VoIP (10) au serveur (100) et le second contrôleur est adapté pour contrôler le second appareil VoIP (20), subir le processus de validation par l'intermédiaire de la communication par VoIP, se connecter au serveur (100), et transmettre l'adresse d'identification du second appareil VoIP (20) au serveur (100)

8. Système de communication selon la revendication 7, dans lequel le contrôleur de serveur (102) est adapté pour remplacer les adresses d'identification précédemment stockées du premier appareil VoIP (10) et du second appareil VoIP (20) correspondant aux informations d'adresse de destination par les adresses d'identification respectives transmises par le premier appareil VoIP (10) et le second appareil VoIP (20) devant être connectés au serveur (100) par le biais du processus de validation.

9. Système de communication selon la revendication 1, dans lequel les communications à courte portée entre l'appareil de communication sans fil émetteur et le premier appareil VoIP (10) et entre l'appareil de communication sans fil récepteur et le second appareil VoIP (20) comprennent un type de communication suivant : communication infrarouge, ultrasonore ou Bluetooth.

10. Procédé de communication de données employant une communication entre des premier et second appareils à Protocole de Voix sur Internet, VoIP, le procédé de communication de données comprenant :
la réception de données de transmission comprenant un numéro d'identification d'un appareil de communication sans fil récepteur et des données de message textuel provenant d'un appareil de communication sans fil émetteur par l'intermédiaire d'une communication à courte portée avec le premier appareil VoIP (10) ;
le procédé de communication de données étant **caractérisé par** la détermination du fait que le numéro d'identification reçu a précédemment été stocké dans le premier appareil VoIP (10) ;
le stockage du numéro d'identification reçu dans le premier appareil VoIP (10) en tant que nouveau numéro d'identification si le numéro d'identification reçu de l'appareil de communication sans fil émetteur n'a pas été précédemment stocké dans le premier appareil VoIP (10) et la transmission d'une adresse d'identification du premier appareil VoIP (10) et dudit numéro d'identification à un serveur (100),
dans lequel le serveur (100) comprend un contrôleur de serveur (102) dans lequel ont été stockées des informations d'adresse de destination relatives aux adresses d'identification des appareils VoIP et les numéros d'identification des appareils de communication sans fil, les adresses d'identification des appareils VoIP correspondant aux numéros d'identification des appareils de communication sans fil ;
l'actualisation des informations d'adresse de destination en fonction des informations d'adresse de destination du nouveau numéro d'identification fondées sur l'adresse d'identification reçue du premier appareil VoIP (10) et le nouveau numéro d'identification,
la conversion des données de transmission en des données de transmission conformes à un protocole VoIP ;
la transmission des données de transmission converties au serveur (100) par l'intermédiaire d'une communication par VoIP ; et
la transmission des données de transmission provenant du serveur (100) au second appareil VoIP (20) en fonction des données de transmission reçues en provenance du premier appareil VoIP (10) et des informations d'adresse de destination.

11. Procédé de communication de données selon la revendication 10, dans lequel l'appareil de communication sans fil récepteur comprend un téléphone mobile ou un assistant numérique personnel (PDA), et dans lequel le numéro d'identification comprend un numéro de téléphone correspondant au téléphone mobile ou au PDA.

12. Procédé de communication de données selon la revendication 10, comprenant en outre :
la conversion des données de transmission reçues en des données de transmission conformes à un protocole sans fil ; et
la transmission des données de transmission converties par l'intermédiaire de la communication à courte portée, si le second appareil VoIP (20) reçoit les données de transmission en provenance du serveur (100).

13. Procédé de communication de données selon la revendication 10, comprenant en outre le traitement des données de transmission reçues et l'affichage d'un message textuel correspondant aux données de message textuel, si le second appareil VoIP (20) reçoit les données de transmission en provenance le serveur (100).

14. Procédé de communication de données selon les revendications 10, comprenant en outre :
la connexion du second appareil VoIP (20) au serveur (100) par le biais d'un processus de validation prédéterminé ; et
la transmission de l'adresse d'identification du second appareil VoIP (20) au serveur (100) à partir du second appareil VoIP (20) qui est connecté au serveur (100).

15. Procédé de communication de données selon la revendication 14, comprenant en outre : le remplacement d'une adresse d'identification correspondante précédemment stockée par une adresse d'identification nouvellement reçue si l'adresse d'identification est reçue en provenance du second appareil VoIP (20).
